Europäisches Patentamt

European Patent Office

Office européen des brevets

(11) Numéro de publication : **0 296 210 B1**

(19)

# (12) FASCICULE DE BREVET EUROPEEN

(45) Date de publication du fascicule du brevet :
**02.09.92 Bulletin 92/36**

(51) Int. Cl.$^5$ : **C01B 31/30,** C01B 21/06,
C01B 21/082, C01B 31/36,
C01B 21/076, C01B 21/064,
C01B 21/068, C01B 21/072

(21) Numéro de dépôt : **88900701.9**

(22) Date de dépôt : **31.12.87**

(86) Numéro de dépôt international :
**PCT/FR87/00526**

(87) Numéro de publication internationale :
**WO 88/05027 14.07.88 Gazette 88/15**

(54) PROCEDE DE FABRICATION DE POUDRES CERAMIQUES.

(30) Priorité : **08.01.87 FR 8700097**

(43) Date de publication de la demande :
**28.12.88 Bulletin 88/52**

(45) Mention de la délivrance du brevet :
**02.09.92 Bulletin 92/36**

(84) Etats contractants désignés :
**AT BE CH DE GB IT LI LU NL SE**

(56) Documents cités :
**FR-A- 1 274 671
US-A- 3 450 499**

(73) Titulaire : **CEREX
24 A, rue de la Résistance ZAE du Mont-Blanc
F-74100 Annemasse (FR)**

(72) Inventeur : **BIENVENU, Gérard
La Greffe Sevraz
F-74250 Viuz-en-Salaz (FR)**

(74) Mandataire : **Thibon-Littaye, Annick
Cabinet A. THIBON-LITTAYE 11 rue de l'Etang
F-78160 Marly-le-Roi (FR)**

EP 0 296 210 B1

## Description

La présente invention concerne la fabrication de poudres céramiques constituées par des composés formés entre au moins un élément ayant la qualité de métalloïde et au moins un élément ayant la qualité de métal. De manière non limitative, elle s'applique notamment à la fabrication de carbures, nitrures, ou carbonitrures des métaux réfractaires que sont en particulier le titane, le tantale, le silicium, le bore, l'aluminium, et les mélanges de ces métaux. Dans ce contexte, l'invention vise essentiellement à obtenir des poudres de qualités améliorées.

Dans ce but, l'invention propose de tirer parti de la propriété qu'ont les métalloïdes de former avec certains éléments, plus particulièrement avec les éléments alcalins et alcalino-terreux, des composés à caractère salin qui sont solubles dans des sels de ces éléments à l'état fondu, en général des halogénures. La réaction conduisant au composé céramique est alors assurée dans ce sel fondu, avec un sel du métal choisi qui est susceptible de se combiner avec le métalloïde du composé à caractère salin.

Un exemple d'un tel composé de métalloïde à caractère salin est le carbure de calcium $CaC_2$, qui est soluble dans les halogénures de calcium à l'état fondu, et plus particulièrement dans le chlorure de calcium $CaCl_2$. Dans ce cas particulier, on est alors conduit à se référer à un procédé qui est connu pour la préparation de poudres métalliques réfractaires, en fait plus spécialement pour la préparation des poudres de titane, et qui consiste à provoquer la réduction du titane à partir du tétrachlorure de titane, dans un bain eutectique de chlorure de sodium et de chlorure de calcium, dans lequel on dissous progressivement du carbure de calcium.

Dans la pratique de ce procédé, on conçoit aisément que la réduction du titane par le carbure de calcium donne lieu à un dépôt de carbone, qui se retrouve avec la poudre de titane dans les produits solides de la réaction, car cet élément est insoluble dans le sel fondu. On ne se trouve pas pour autant en présence d'une poudre obtenue selon la présente invention, car il s'agit d'un mélange de carbone et de titane, et non d'une poudre d'un composé intermétallique bien défini qui, dans ce cas particulier, devrait être le carbure de titane TiC.

Par rapport à cet état de la technique, l'invention a l'avantage de conduire à des composés céramiques qui sont obtenus sou.a la forme d'une poudre très homogène, aussi bien dans sa composition chimique que dans ses qualités physiques, dans des dimensions granulométriques reproductibles, qui sont en général submicroniques. De la sorte, ces poudres satisfont pleinement aux besoins des applications de haute technologie qui ont vu le jour récemment. Elles conviennent notamment à la fabrication des outils de coupe en carbure, nitrure, ou carbo-nitrure réfractaire et à celle de toutes sortes d'éléments de structure à haute performance qui sont mis en forme par les technologies de la métallurgie des poudres appliquées aux cermets. Dans ce genre d'application, les poudres obtenues par le procédé de l'invention peuvent être mises en oeuvre directement, en remplacement des poudres que l'on sait obtenir de manière classique par carburation ou nitruration à sec des oxydes métalliques correspondants et broyage des produits solides obtenus.

Dans ce but, l'invention propose un procédé de fabrication à l'état de poudre de composés céramiques formés entre un métalloïde et un métal réfractaire, caractérisé en ce qu'il comporte les étapes suivantes :

a) on fait réagir ledit métalloïde avec un métal réducteur, au sein d'un bain liquide constitué au moins en partie par un sel fondu dudit métal réducteur, pour obtenir un composé intermédiaire à caractère salin combinant le métal réducteur et le métalloïde, en solution dans ledit bain ;

b) on injecte ensuite dans ledit bain un sel réductible dudit métal réfractaire, sous une forme divisée directement répartie dans l'ensemble du bain, pour produire ladite poudre par réaction du sel réductible avec ledit composé intermédiaire du métal réducteur.

Dans un mode de mise en oeuvre particulier du procédé de l'invention, ce procédé comporte en outre une étape c) dans laquelle on introduit dans le bain une quantité supplémentaire du métal réducteur pour réagir avec le métalloïde excédentaire éventuellement laissé par la réaction de l'étape b), avant de recueillir la poudre céramique produite.

L'opportunité de cette étape c) dépend essentiellement de la stoechiométrie de la réaction effectuée dans l'étape b).

Le procédé selon l'invention peut s'appliquer à la fabrication d'un grand nombre de poudres céramiques en choisissant de manière appropriée le métal réducteur intermédiaire, la nature du sel fondu constituant le bain, celle du sel réductible du métal réfractaire, ainsi que les conditions opératoires des étapes successives, en particulier en ce qui concerne la température à laquelle le bain est maintenu dans l'étape b) pour provoquer la réaction souhaitée, avantageusement de telle sorte que la température du bain engendre par conséquence une vaporisation du sel réductible du métal réfractaire.

Dans la plupart des applications, on a intérêt à choisir comme sels, des halogénures, notamment des chlorures, aussi bien pour le bain de sel fondu que pour le sel réductible du métal réfractaire. Le bain solvant peut ainsi être constitué avantageusement par du chlorure de calcium $CaCl_2$, utilisé pur ou en mélange avec d'autres halogénures.

Dans une forme de mise en oeuvre préférée du procédé de l'invention concernant l'étape a), le métal réducteur est préalablement mis en solution dans le bain et le métalloïde est introduit en proportions sensiblement stoechiométriques pour former le composé intermédiaire à caractère salin, la proportion du bain étant suffisante pour assurer la dissolution complète du composé intermédiaire. Eventuellement, le métalloïde est introduit sous forme d'une solution dans une autre portion de sel fondu.

Naturellement, l'invention concerne également les poudres céramiques obtenues par le procédé ci-dessus, et notamment celles qui sont obtenues ainsi sous une granulométrie submicronique.

L'obtention de poudres de bonne pureté semble essentiellement liée à l'intervention simultanée d'une réduction du métal réfractaire et de sa réaction avec le métalloïde, à partir d'un composé pur, issu de la combinaison du métal réducteur pur et du métalloïde pur, qui est de préférence formé in situ dans bain de sel fondu, et qui est du moins introduit pour dissolution dans celui-ci avant de le mettre en présence avec le métal à réduire, ceci conduisant à une germination fine. De plus, il est apparu favorable à une granulométrie fine et homogène que la réaction de l'étape b) se produise au contact de bulles formées par le sel réductible à l'état gazeux et réparties régulièrement dans toute la masse de bain de sel fondu. On ne saurait évidemment se limiter ici à une interprétation particulière de la réaction homogène entre les espèces dissoutes, mais il est probable que la dispersion fine des bulles engendre une meilleure dissolution du composé métallique, la réaction de réduction s'opèrerait entre un composé à caractère salin et l'ion correspondant du métalloïde.

Les éléments qui à l'état métallique sont solubles partiellement dans un sel fondu du même élément et qui sont susceptibles de former avec les métalloïdes des composés à caractère salin, constituant le composé intermédiaire ci-dessus, peuvent être choisis principalement :
– soit dans la famille des métaux alcalins, comprenant le lithium (Li), le sodium (Na) et le potassium (K),
– soit dans celle des métaux alcalino-terreux, comprenant le béryllium (Be), le magnésium (Mg), le calcium (Ca), le strontium (Sr) et le baryum (Ba),
– soit encore l'aluminium en mélange avec le lithium si le métalloïde est l'hydrogène, car l'aluminium forme un hydrure double avec le lithium,
– ou l'uranium qui forme avec le carbone utilisé comme métalloide des carbures à caractère salin.

Les métalloïdes qui sont utilisés préférentiellement dans la mise en oeuvre de l'invention sont l'azote (N), le phosphore (P), le carbone (C), le silicium (Si) et le bore (B) ou l'oxygène (O). Ils servent à former avec les métaux ci-dessus des composés qui sont dissous dans le sel fondu et qui libèrent ensuite le métal réducteur lors de la mise en contact avec le sel réductible. Dans les formes de mises en oeuvre préférées de l'invention, le métal réducteur est le calcium et le sel fondu solvant est le chlorure de calcium. Une fois le calcium dissous dans ce bain, le métalloïde est de préférence du carbone que l'on introduit dans ce bain à l'état solide, ou de l'azote que l'on introduit à l'état gazeux. On peut aussi combiner le calcium en partie avec du carbone et en partie avec de l'azote, le procédé selon l'invention conduisant alors à la fabrication de carbo-nitrures.

Les métaux réfractaires capables de former des composés définis avec les métalloïdes ci-dessus, plus particulièrement avec le carbone et/ou l'azote, dans le procédé de fabrication des poudres céramiques selon l'invention, sont avantageusement : le titane (Ti), le zirconium (Zr), le hafnium (Hf), le bore (B), le silicium (Si), le tantale (Ta), le niobium (Nb), le molybdène (Mo), le tungstène (W), l'aluminium (Al), ainsi que leurs mélanges. Ils sont injectés dans le bain de sel fondu, à l'étape b) du procédé, sous forme de sel réductible, et de préférence sous forme d'halogénure et notamment de chlorure. On notera que le bore dans la présente invention peut être utilisé soit comme réducteur par le borure de calcium ($B_6Ca$), soit comme métal pour obtenir le carbure de bore ($B_4C$) ou le nitrure de bore (BN). Son comportement est intermédiaire entre celui des métaux et des métalloïdes.

On a vu ci-dessus qu'il était en général préférable, bien que cela ne soit pas toujours indispensable, que le sel réductible entre en contact avec le composé salin du métal réducteur alors qu'il est sous forme de bulles gazeuses réparties dans l'ensemble du bain. Il est donc avantageux de maintenir le bain de sel fondu à une température au moins égale à la température de vaporisation du sel réductible. Le sel réductible peut être lui-même déjà à l'état gazeux à moment de son injection, mais il peut aussi être à l'état liquide ou dissous dans un sel fondu, ou également à l'état d'un solide sous forme divisée lorsque les conditions opératoires sont telles qu'il se vaporise immédiatement dans le bain.

L'invention sera maintenant plus complètement décrite dans le cadre d'exemples particuliers de mise en, oeuvre qui concernent la préparation de poudres submicroniques de carbures, nitrures ou carbonitrures de métaux réfractaires, choisis principalement parmi le titane, le tungstène, le bore, le silicium, l'aluminium et leurs mélanges, ou éventuellement parmi en plus le tantale, le zirconium, le hafnium, le niobium, le molybdène.

**EXEMPLE 1**

On prépare une poudre de carbure de titane selon l'invention en utilisant comme réducteur du carbure de calcium préparé in situ dans un bain de sel fondu essentiellement constitué de chlorure de calcium.

On utilise pour cela une masse de 20 kg de $CaCl_2$ fondu qui est préalablement déshydratée.

Pour synthétiser le carbure de calcium in situ, on commence par dissoudre 866 g de calcium dans le bain de chlorure de calcium et on ajoute ensuite 520 g de carbone à 850 °C de façon à produire la réaction :

$$Ca + 2C ---> CaC_2.$$

Puis on injecte dans le bain 1920 g de tétrachlorure de titane ($TiCl_4$) qui est amené sous forme gazeuse au moyen d'un diffuseur qui le répartit rapidement dans l'ensemble du bain. Ce dernier est maintenu à une température de 1000 °C. On réalise ainsi la réaction :

$$TiCl_4 + 2 CaC_2 ---> TiC + 2 CaCl_2 + 3 C.$$

Pour éliminer le carbone solide laissé comme sous-produit par la réaction stoechiométrique, on ajoute dans le bain 610 g de calcium lorsque la disparition des bulles gazeuses témoigne de la fin de la réaction de formation du carbure de titane. Cet ajout a pour conséquence de recombiner le calcium à l'état de carbure de calcium soluble dans le bain de chlorure de calcium.

On recueille alors le carbure de titane, obtenu à l'état solide pulvérulent par l'une quelconque des méthodes classiques de séparation solide/liquide telles, que la décantation, la filtration ou la centrifugation.

La poudre de carbure de titane ainsi obtenue présente une granulométrie moyenne de 0,5 μm, et son paramètre de maille est a = 4,3279 angströms.

**EXEMPLE 2**

Pour réaliser la fabrication d'une poudre de nitrure de titane TiN on utilise comme réducteur le nitrure de calcium.

Les réactions ont lieu dans un bain de sel fondu de 20 kg de chlorure de calcium $CaCl_2$. Dans ce bain on dissout 160 g de calcium, que l'on fait ensuite réagir avec de l'azote, qui est injecté au rythme de 2 litres par heure, le bain étant maintenu à une température de 850 °C. La réaction s'écrit de la manière suivante :

$$3 Ca + N2 ----> Ca 3 N2.$$

On introduit alors 0,22 litre de tétrachlorure de titane $TiCl_4$, qui est injecté à l'état gazeux par un diffuseur au sein du bain réactionnel. Pour cette opération la température du bain est portée à 1000 °C. Dans ces conditions il se produit la réaction suivante :

$$2 Ca 3 N_2 + 3 TiCl_4 ----> 3 TiN + 6 CaCl_2 + \frac{1}{2} N_2$$

L'azote dégagé est éliminé tandis que la poudre solide de nitrure de titane est séparée du bain liquide.

Après lavage par une solution aqueuse acide dans laquelle se dissout le chlorure de calcium éventuellement entraîné, le produit se présente sous la forme d'une poudre noire sombre et très fine présentant, un paramètre de maille de a = 4,2359 ansgtröms, avec une variation de 0,257 % dont la granulométrie est inférieure à 0,1 μm.

**EXEMPLE 3**

En vue de produire du carbonitrure de titane les composés réducteurs intermédiaires sont obtenus par introduction successive de carbone et d'azote dans un bain de sel fondu de 2 kg de $CaCl_2$.

Les quantités de réactifs utilisés sont de 80 g de calcium et 48 g de carbone, qui réagissent pour former le carbure de calcium en solution dans le bain de chlorure. Le bain étant maintenu à une température de l'ordre de 800 °C, on y injecte ensuite de l'azote au débit de 2 litres par heure.

La réaction est la suivante :

$$CaC_2 + N_2 ----> C + Ca CN_2.$$

Elle fournit donc de la cyanamide calcique qui est soluble dans le bain de chlorure de calcium fondu et qui sert de réducteur pour le tétrachlorure de titane, dont on injecte ensuite 105 cm³ par le diffuseur.

Il se produit alors la réaction suivante :

$$2 CaCN_2 + TiCl_4 ----> 2 CaCl_2 + Ti (C,N) + 3 N/2$$

Cette réaction est opérée à 900 °C.

La composition chimique de la poudre obtenue correspond à la formule Ti (C 0,75, N 0,25). Son paramètre de maille est a = 4,30266 angströms, avec une variation moyenne de 0,00287 angströms.

## EXEMPLE 4

Le procédé de l'invention est appliqué à la synthèse du nitrure de silicium Si₃N₄. Elle est réalisé en deux temps dans un bain de sel fondu formé de 3 kg de calcium.

Avec 248 g de Ca on synthétise d'abord Ca 3 N₂ à 800 °C selon la réaction :

$$3 \, Ca + N_2 \longrightarrow Ca_3 \, N_2.$$

L'azote est injecté dans le bain par un diffuseur au débit de 5 litres par heure.

Lors de l'injection subséquente du chlorure de silicium SiCl₄ à la même température, il se produit la réaction intermédiaire :

$$SiCl_4 + Ca_3 \, N_2 \longrightarrow Ca \, Si \, N_2.$$

Et quand on élève ensuite la température à 1000 °C, la nitruration complète du silicium est obtenue selon la réaction :

$$2 \, Ca \, Si \, N_2 + Si \, Cl_4 \longrightarrow Si_3 \, N_4 + 2 \, CaCl_2.$$

On injecte au total 970 cm3 de SiCl₄. La destruction du Ca Si N₂ est complète.

La poudre obtenue est séparée du bain liquide puis lavée au moyen d'eau légèrement chlorhydrique. Sa granulométrie est de 0,3 μm.

## EXEMPLE 5

La fabrication d'une poudre de carbure de tantale TaC est réalisée par le procédé de l'invention comme on l'a décrit à l'exemple 1 pour le carbure de titane, sauf que le chlorure de tantale TaCl₅ est introduit à l'état solide et non plus à l'état gazeux. En fait le pentachlorure de tantale est introduit sous une forme très divisée et il se vaporise immédiatement au contact du bain de chlorure de calcium. Cette vaporisation, alliée à une agitation du bain, permet une grande diffusion du composé dans l'ensemble du bain. Le TaC formé possède une grande surface spécifique, supérieure à 45 m2/g.

## EXEMPLE 6

Suivant la même procédure que celle de l'exemple 1 on synthétise le carbure de silicium SiC.

On introduit 1175 g de calcium dans un bain de sel fondu de 15 kg de CaCl₂, puis 710 g de carbone.

On injecte ensuite à 1020 °C, 32 litres de tétrachlorure de silicium, de sorte que la réaction suivante se produise :

$$Si \, Cl_4 + 2 \, Ca \, C_2 \longrightarrow SiC + 3 \, C + 2 \, Ca \, Cl_2$$

On laisse le bain refroidir puis on ajoute du calcium pour redissoudre le carbone et l'on sépare la poudre de carbure de silicium qui est ensuite lavée. Elle présente un granulométrie de 0,5 μm.

## EXEMPLE 7

Le procédé est appliqué à la fabrication du carbure de bore B₄C. Le carbure de calcium est d'abord préparé in situ dans un bain de 15 kg de chlorure de calcium fondu, par réaction de 1175 g de calcium et 710 g de carbone à 850 °C.

Par un diffuseur on injecte ensuite 1,6 litre de BCl₃ au sein du bain pour produire à 950 °C la réaction suivante :

$$4 \, B \, Cl_3 + CaC_2 \longrightarrow B_4C + 6 \, Ca \, C_2 \longrightarrow B_4C + 6 \, Ca \, Cl_2 + 11 \, C$$

La grande quantité de carbone produite, pouvant nuire à la qualité de la poudre de B₄C, est éliminée par l'apport de 1070 g de Ca pour obtenir la quantité équivalente de carbure de calcium, soluble dans le bain.

Après refroidissement du bain, on obtient par filtration une poudre de B₄C à 0.6 μm de granulométrie moyenne.

## EXEMPLE 8

Le procédé est appliqué à la fabrication de nitrure de bore.

Dans un bain de 5 kg de CaCl₂ fondu on dissout 400 g de calcium, puis on injecte à l'aide d'un diffuseur de l'azote à 20 litres par heure, pour produire à 850 °C la réaction :

$$3 \, Ca + N_2 \longrightarrow Ca_3 \, N_2.$$

Ensuite on élève la température du bain à 1000 °C et à l'aide d'un diffuseur, on injecte 1,6 litre de trichlorure de bore TCl₃. Il se produit la réaction suivante :

$$2 \, BCl_3 + Ca_3 \, N_2 \longrightarrow 2 \, BN + 3 \, CaCl_2$$

La réaction est complète. Il n'est donc pas besoin d'ajouter du calcium. Par lavage et filtration on obtient une poudre de nitrure de bore à 0,65 $\mu$m de granulométrie.

## EXEMPLE 9

On fabrique une poudre de nitrure d'aluminium AlN dans un bain de sel fondu contenant 1 kg de chlorure de calcium. Le composé réducteur intermédiaire est $Ca_3 N_2$, qui est obtenu par dissolution de 80 g de calcium dans le bain et réaction avec de l'azote introduit par une canne d'injection au débit de 20 litres par heure.

On injecte ensuite dans le bain 180 g de $AlCl_3$ sous forme gazeuse par l'intermédiaire d'une canne d'injection, pour produire la réaction suivante :

$$2 AlCl_3 + Ca_3 N_2 ----> 2 Ca Cl_2 + 2 AlN$$

Grâce à la diffusion du réactif sous forme de bulles à saturation, la réaction est complète. Par lavage et filtration on obtient une poudre de granulométrie comprise entre 0,2 et 0,8 $\mu$m.

## EXEMPLE 10

Alors que les exemples précédents illustrent la préparation de poudre submicronique de carbure par réaction entre le carbure de calcium réducteur et des sels réductibles constitués par $TiCl_4$, $BCl_3$, $SiCl_4$, $TaCl_5$,$AlCl_3$,, la même procédure est appliquée en utilisant comme sels réductibles $ZrCl_4$, $HfCl_4$, $NbCl_5$, $MoCl_5$.

La réaction fournit le nitrure du métal correspondant. Des carbures mixtes sont obtenus quand on utilise des chlorures de métaux différents en mélange.

## EXEMPLE 11

Les différents chlorures considérés dans l'exemple précédent sont utilisés, seuls ou en'mélange, en remplaçant le réducteur par du nitrure de calcium obtenu in situ comme dans l'exemple 2 ou par de la cyanamide calcique obtenue in situ comme dans l'exemple 3.

On obtient alors, sous forme de poudre submicronique, les nitrures ou les carbonitrures des éléments métalliques présents dans les sels réductibles.

Naturellement l'invention n'est pas limitée aux exemples décrits ci-dessus, non plus qu'aux conditions particulières de leur mise en oeuvre.

## Revendications

1. Procédé de fabrication, à l'état de poudre, de composés céramiques formés entre un métalloïde et un métal réfractaire, caractérisé en ce qu'il comporte les étapes suivantes :

   a) on fait réagir ledit métalloïde avec un métal réducteur au sein d'un bain liquide constitué au moins en partie par un sel fondu dudit métal réducteur, pour obtenir un composé intermédiaire à caractère salin combinant ledit métal réducteur et le métalloïde, en solution dans ledit bain,

   b) on injecte ensuite dans ledit bain un sel réductible dudit métal réfractaire sous une forme divisée directement répartie dans l'ensemble du bain, pour produire ladite poudre par réaction du sel réductible avec ledit composé intermédiaire du métal réducteur.

2. Procédé selon la revendication 1, caractérisé en ce que dans l'étape a) le métal réducteur est préalablement mis en solution dans ledit bain et le métalloïde est introduit en proportions sensiblement stoechiométriques pour former ledit composé intermédiaire à caractère salin, la proportion dudit bain étant suffisante pour assurer la dissolution complète dudit composé intermédiaire.

3. Procédé selon la revendication 1 ou 2, caractérisé en ce que dans l'étape b) on injecte le sel réductible soit à l'état gazeux, soit à l'état d'un liquide ou d'un solide divisé, dans des conditions de température telles qu'il réagisse dans le bain, à l'état gazeux.

4. Procédé selon l'une quelconque des revendications 1 à 3, caractérisé en ce qu'il comporte en outre une étape c) dans laquelle on introduit dans ledit bain une quantité supplémentaire de métal réducteur pour réagir avec le métalloïde excédentaire éventuellement laissé par la réaction de l'étape b), avant de recueillir la poudre céramique produite.

5. Procédé selon l'une quelconque des revendications 1 à 4, caractérisé en ce que dans l'étape a) le métal réducteur est du calcium que l'on dissout dans un bain de chlorure de calcium fondu.

6. Procédé selon l'une quelconque des revendications 1 à 5, appliqué à la fabrication de carbures, nitrures ou carvonitrures de métaux réfractaires.

7. Procédé selon la revendication 6, caractérisé en ce que le métalloïde est au moins en partie du carbone que l'on introduit dans ledit bain à l'état solide.

8. Procédé selon la revendication 6 ou 7, caractérisé en ce que le métalloïde est au moins en partie de l'azote que l'on introduit dans ledit bain à l'état gazeux.

9. Procédé selon l'une quelconque des revendications 1 à 8, caractérisé en ce que le sel réductible est un halogénure du métal réfractaire, notamment un chlorure.

10. Procédé selon la revendication 9, caractérisé en ce que l'halogénure est diffusé dans ledit bain à l'état gazeux.


**Patentansprüche**

1. Verfahren zur Herstellung keramischer Verbindungen, die zwischen einem Nichtmetall und einem feuerfesten Metall gebildet werden, in einem pulverförmigen Zustand, **dadurch gekennzeichnet,** daß es die folgenden Schritte umfaßt:

   a) es wird veranlaßt, daß das Nichtmetall in einem Flüssigkeitsbad, das mindestens teilweise aus einem geschmolzenen Salz eines reduzierenden Metalls besteht, mit dem reduzierenden Metall reagiert, damit eine salzartige Zwischenverbindung, bei der das reduzierende Metall und das Nichtmetall verbunden sind, in Form einer Lösung in dem Bad erhalten wird;

   b) dann wird in das Bad ein reduzierbares Salz des feuerfesten Metalls in einem zerteilten Zustand, das überall in dem Bad direkt verteilt wird, injiziert, damit das Pulver durch Reaktion des reduzierbaren Salzes mit der Zwischenverbindung des reduzierenden Metalls hergestellt wird.

2. Verfahren nach Anspruch 1, dadurch gekennzeichnet, daß in Schritt a) das reduzierende Metall vorher in dem Bad gelöst wird und das Nichtmetall in im wesentlichen stöchiometrischen Anteilen eingeführt wird, damit die salzartige Zwischenverbindung gebildet wird, wobei der Anteil des Bades ausreicht, um eine vollständige Auflösung der Zwischenverbindung zu gewährleisten.

3. Verfahren nach Anspruch 1 oder Anspruch 2, dadurch gekennzeichnet, daß in Schritt b) das reduzierbare Salz entweder in gasförmigem Zustand oder im Zustand einer Flüssigkeit oder eines zerteilten Feststoffs unter derartigen Temperaturbedingungen injiziert wird, daß das Salz in gasförmigem Zustand in dem Bad reagiert.

4. Verfahren nach einem der Ansprüche 1 bis 3, dadurch gekennzeichnet, daß dieses Verfahren ferner einen Schritt c) umfaßt, in dem vor dem Sammeln des hergestellten keramischen Pulvers eine zusätzliche Menge des reduzierenden Metalls in das Bad eingeführt wird, damit es mit etwaigem überschüssigem Nichtmetall reagiert, das durch die Reaktion von Schritt b) zurückgelassen worden sein kann.

5. Verfahren nach einem der Ansprüche 1 bis 4, dadurch gekennzeichnet, daß in Schritt a) das reduzierende Metall Calcium ist, das in einem Bad aus geschmolzenem Calciumchlorid gelöst wird.

6. Verfahren nach einem der Ansprüche 1 bis 5, das auf die Herstellung von Carbiden, Nitriden oder Carbonitriden feuerfester Metalle angewandt wird.

7. Verfahren nach Anspruch 6, dadurch gekennzeichnet, daß das Nichtmetall mindestens teilweise aus kohlenstoff besteht, der in festem Zustand in das Bad eingeführt wird.

8. Verfahren nach Anspruch 6 oder Anspruch 7, dadurch gekennzeichnet, daß das Nichtmetall mindestens teilweise aus Stickstoff besteht, der in gasförmigem Zustand in das Bad eingeführt wird.

**9.** Verfahren nach einem der Ansprüche 1 bis 8, dadurch gekennzeichnet, daß das reduzierbare Salz ein Halogenid des feuerfesten Metalls und insbesondere ein Chlorid ist.

**10.** Verfahren nach Anspruch 9, dadurch gekennzeichnet, daß das Halogenid in gasförmigem Zustand in dem Bad ausgebreitet wird.

**Claims**

**1.** A method of manufacturing pulverulent ceramic compounds formed between a metalloid and a refractory metal, and characterised in that it comprises the following steps:

a) The metalloid is reacted with a reducing metal in a liquid bath consisting at least partly of a molten salt of the reducing metal, to obtain a salt-like intermediate compound combining the reducing metal and the metalloid in solution in the bath, and

b) A reducible salt of the refractory metal, in divided form, is then injected into the bath and directly distributed throughout the bath, in order to produce the powder by a reaction between the reducible salt and the intermediate compound of the reducing metal.

**2.** A method according to claim 1, characterised in that in step a), the reducing metal is first dissolved in the bath and the metalloid is introduced in substantially stoichiometric proportions to form the salt-like intermediate compound, the proportion of the bath being sufficient to completely dissolve the intermediate compound.

**3.** A method according to claim 1 or 2, characterised in that in step b), the reducing salt is injected in the form either of gas or liquid or a divided solid, under temperature conditions such that it reacts in a gaseous state in the bath.

**4.** A method according to any of claims 1 to 3, characterised in that it also comprises a step c) in which an additional quantity of reducing metal is introduced into the bath in order to react with any excess metalloid left by the reaction in step b), before collecting the resulting ceramic powder.

**5.** A method according to any of claims 1 to 4, characterised in that in step a), the reducing metal is calcium and is dissolved in a bath of molten calcium chloride.

**6.** A method according to any of claims 1 to 5, applied to the manufacture of carbides, nitrides or carbonitrides of refractory metals.

**7.** A method according to claim 6, characterised in that the metalloid consists at least partly of carbon which is introduced into the bath in a solid state.

**8.** A method according to claim 6 or 7, characterised in that the metalloid consists at least partly of nitrogen which is introduced into the bath in a gaseous state.

**9.** A method according to any of claims 1 to 8, characterised in that the reducing salt is a halide of the refractory metal. inter alia a chloride.

**10.** A method according to claim 9, characterised in that the halide is diffused in gaseous form in the bath.